# EUROPÄISCHE PATENTSCHRIFT

(11) **EP 2 319 257 B1**
(45) Veröffentlichungstag und Bekanntmachung des Hinweises auf die Patenterteilung: **29.10.2014**
(21) Anmeldenummer: 09776670.3
(22) Anmeldetag: 02.06.2009
(51) Int. Cl.: H04W 8/12

(54) **AUTOMATISCHER ABGLEICH VON ROAMING-DATEN ODER ROUTING DATEN**
AUTOMATIC COMPARISON OF ROAMING DATA OR ROUTING DATA
ALIGNEMENT AUTOMATIQUE DE DONNÉES D'ITINÉRANCE OU DE DONNÉES DE ROUTAGE

(30) Priorität: 29.07.2008 DE 102008035392
(43) Veröffentlichungstag der Anmeldung: 11.05.2011
(73) Patentinhaber: Deutsche Telekom AG, 53113 Bonn (DE)
(72) Erfinder: HABERKORN, Günter, 92262 Birgland/Schwend (DE); VAN DEN BERGE, Fridtjof, 53227 Bonn(-Oberkassel) (DE); GABLER, Alexander, 53639 Königswinter (DE)
(74) Vertreter: Cohausz Hannig Borkowski Wißgott
(86) Internationale Anmeldenummer: PCT/EP2009/003913
(87) Internationale Veröffentlichungsnummer: WO 2010/012332

(56) Entgegenhaltungen:
- EP-A- 1 565 028
- US-B1- 6 731 932
- US-B1- 7 133 670
- GSM ASSOCIATION: "GSM Association Roaming Database, Structure and Updating Procedures Ver. 4.2, IR.21" GSM ASSOCIATION, April 2007 (2007-04), XP002550588 GSM Association, Official Document: IR.21

## Beschreibung

Die Erfindung betrifft ein Verfahren zum Abgleich von Netzdaten, insbesondere Roaming-Daten oder Routing-Daten, zwischen mindestens zwei Datenbanken, wobei eine erste Datenbank mit einem ersten Datenverarbeitungssystem verbunden ist und das erste Datenverarbeitungssystem einem ersten Kommunikationsnetzwerk zugeordnet ist, eine zweite Datenbank mit einem zweiten Datenverarbeitungssystem verbunden ist und das zweite Datenverarbeitungssystem einem zweiten Kommunikationsnetzwerk zugeordnet ist, wobei das erste und das zweite Datenverarbeitungssystem über eine Kommunikationsverbindung miteinander verbunden sind, und wobei in der ersten Datenbank in Datensätzen gehaltene Netzdaten hinterlegt und zum Abgleich mit der zweiten Datenbank bereitgestellt werden. Weiterhin betrifft die Erfindung ein Computerprogrammprodukt und ein Kommunikationssystem zur Ausführung des Verfahrens.

Zum Austausch von Verbindungs- und Signalisierungsdaten zwischen Kommunikationsnetzwerken sind eindeutige Kennungen erforderlich, welche die Routingwege sowie die Kommunikationsberechtigungen zwischen den Kommunikationsnetzwerken definieren. Diese Kommunikationsverbindungen werden in drei Netztypen unterschieden:
- Sprachnetz
- Signalisierungsnetz
- Datennetz

Informationen zum Routen von u. a. Sprache, Daten und Steuersignalen sind im Mobilfunkbereich in einem internationalen, standardisierten Dokument (IR.21) abgelegt und beinhalten u.a. sogenannte Roaming-Daten/ Routing-Daten. Beispielsweise sind hierin folgende netzspezifischen Daten erfasst:
- E.164 (Global Title)
- E.214 (Mobile Global Title)
- E.212 (Mobile Country Code, Mobile Network Code)
- MSRN Formate (Mobile Subscriber Roaming Number)
- MSISDN Formate (Mobile Subscriber Integrated Services Digital Network Number)
- SMS/MMS Service Center Informationen
- IP Adressen der Netzelemente
- GPRS Informationen (General Packet Radio Service)
- GRX Routinginformationen (GPRS Roaming Exchange)
- CAP-Versionen (CAMEL Applikation Protocol)
- Routing Informationen
- Global Title der Netzelemente
- Formate der MSISDN
- Der Nachrichtenaustausch zwischen zwei Kommunikationsnetzwerken erfolgt über sogenannte Routingdaten, wobei das Zielnetzelement im wesentlichen über
- Country-/Network-Destination-Code (CC + NDC)
- Mobile Country-/Mobile Network-Code oder
- IP Adressen bzw. -Ranges mit dazu gehörigem AS-Nummer adressiert wird.

Routingdaten kennzeichnen die unterschiedlichen Kommunikationswege, beispielsweise um Wege innerhalb eines Mobilfunknetzes, eines kabelgebundenen Festnetzes, eines IP (Internetprotokoll)-fähigen Netzwerkes wie das Internet oder um eine Satellitenkommunikation festzulegen. Roamingdaten dienen im wesentlichen der Freigabe einer Kommunikationsbeziehung zwischen zwei Kommunikationsnetzwerken. Beide Informationstypen werden in einer lokalen Datenbank des Netzbetreibers gespeichert sowie in den Netzelementen des Netzbetreibers bekannt gemacht. Diese Daten sind grundsätzlich bei jeglicher netzübergreifender Kommunikation, d. h. bei einer Kommunikation von einem ersten Kommunikationsnetz zu einem anderen Kommunikationsnetz erforderlich. Dabei kann jedes der beiden Kommunikationsnetze sowohl ein Festnetz als auch ein Mobilfunknetz sein.

Derzeit finden Aktualisierungen von Roaming- und Routingdaten in den Datenbanken der Netzwerkbetreiber nicht tagesaktuell statt. Es entstehen vielmehr Rückstände in der Datenkomplettierung, die sich über mehrere Wochen hinziehen können. Dies resultiert im Wesentlichen daraus, dass beim internationalen Roaming viele unterschiedliche Datenarten zu berücksichtigen sind, und die Zuständigkeiten für die Bereitstellung derartiger Datenarten auf mehrere unterschiedliche Abteilungen eines Netzwerkbetreibers verteilt sind. Gegebenenfalls müssen Daten von anderen Netzbetreibern modifiziert werden, um Überschneidungen in unterschiedlichen Datensätzen zu vermeiden.

Da bei einer netzübergreifenden Kommunikation Daten zu berücksichtigen sind, die sich ständig ändern, d. h. sogenannte dynamische Daten oder auch Delta-Daten genannt, beispielsweise zu den Diensten Post-paid-, Pre-paid- und IP-Roaming, ist ein nicht tagesaktueller Datenbankinhalt für die ausländischen Netzbetreiber kaum akzeptabel. Jegliche Delta-Daten, d. h. einen spezifischen Netzbetreiber betreffende Daten, die sich verändert und geändert haben, werden auf einem Server der GSMA (Global Systems for Mobile Communications Association) in Dublin in einem Dokument hinterlegt, welches als IR.21-Dokument bezeichnet wird. Die Hinterlegung wird von Netzbetreiber optional (nicht verpflichtend) vorgenommen.

Die auf dem GSMA-Server hinterlegten Dokument werden manuell erstellt. Die dort eingetragenen Delta-Daten kommen von unterschiedlichen Abteilungen und werden wiederum von anderen Abteilungen in vorgenannten Medien eingebracht. Das IR.21-Dokument wird nach Änderung, d. h. nach seinem Update, per E-Mail an sämtliche Netzbetreiber anderer Mobilfunknetze verschickt. Dies geschieht entweder über den GSMA-Server oder manuell durch den betreffenden Netzbetreiber. Das IR.21-Dokument ist ein Microsoft®-Word oder Microsoft®-Excel®-Dokument, in welches die Delta-Daten eingetragen werden.

Problematisch ist bei dieser Art der Datenhinterlegung, dass sie sich an dokumentenähnliche Formate und Strukturen orientiert. Nicht jedoch in typischer Form einer Datenbank abgelegt sind. Eine Abfrage von Delta-Daten, beispielsweise die Nachfrage von Änderungen ab einem gewissen Datum, von Global Title usw., ist dadurch nicht möglich. Die aktualisierten Dokumente müssen vielmehr inhaltlich manuell bearbeitet und die darin enthaltenen Daten von den einzelnen Netzanbietern bearbeitet und auf Delta-Daten kontrolliert werden, was insgesamt umständlich und zeitaufwendig ist. Dieselben Nachteile liegen auch im Festnetzbereich vor, d. h. bei Datenbanken, in denen Routing-Daten hinterlegt sind. Auch diese Daten werden den Datenbankbetreibern in einzelnen Dokumenten mitgeteilt und manuell in die jeweiligen Datenbanken der Netzanbieter eingepflegt.

In beiden Fällen liegt kein automatischer Abgleich der dynamischen Roaming-Daten bzw. der Routing-Daten mit anderen Netzwerkbetreibern vor. Durch die manuelle Einpflegung von Daten entstehen massive Verzögerungen beim internen und externen Datenabgleich. Durch fehlende bzw. nicht aktuelle Daten ergeben sich Qualitätseinbrüche, Einnahmeverluste und erhebliche Verzögerungen bei der Störungsbearbeitung, da vorab stets eine Recherche erforderlich ist, um die Aktualität der Roaming-Daten bzw. der Routing-Daten zu überprüfen. Durch die dokumentenähnliche Verwendung von geänderten Daten an die Betreiber anderer Kommunikationsnetze entsteht zusätzlich ein erheblicher Arbeitsaufwand, da ein manuelles Einpflegen der Updates erforderlich ist.

Es ist daher Aufgabe der vorliegenden Erfindung, ein Verfahren zum Abgleich von Netzdaten, insbesondere Roaming-Daten und/oder Routing-Daten, zwischen zwei Datenbanken bereitzustellen, um den Arbeitsaufwand bei der Aktualisierung der Daten erheblich zu reduzieren, die Fehlerrate durch manuelle Eingabefehler zu reduzieren, für eine hohe Aktualität der Daten zu sorgen und damit einen hohen Qualitätsstandard bei Roaming- und Routing-Dienstleistungen zu gewährleisten. Ferner ist es Aufgabe der Erfindung, durch einen automatischen Abgleich Verzögerungen, Fehler und Arbeitsaufwände bei der Datenbereitstellung zu reduzieren . Hierdurch können Servicebeeinträchtigungen, Netzstörungen vermieden und Ressourcen eingespart werden.

Diese Aufgabe wird durch die Merkmale der unabhängigen Ansprüche gelöst. Vorteilhafte Weiterbildungen der Erfindung sind Gegenstand der abhängigen Ansprüche.

Derzeit werden für das International Roaming relevanten Daten wie E.164-GT, E.212 (Mobile Country Code, Mobile Network Code), E.214-MGT, Network Node GT Range, MSRN (Mobile Station Roaming Number), CAP-Versionen, GPRS (General Packet Radio Service) -Daten, MMS (Multimedia Messaging Service)-Daten, Billingparameter, Tarifen und Regionen, Ansprechpartner, usw. im Dokument-Format bzw. als Excel®- oder Word®- Dokument (AA.14, IR.21, usw.) per e-Mail verschickt. Dieser Datenaustausch wird nicht sorgfältig und/oder zeitnah von den Netzbetreibern durchgeführt. Des Weiteren werden diese Daten in der GSMA Datenbank häufig unvollständige oder nicht aktuell geführt bzw. weichen von von der Angabe im IR.21-Dokument ab.

Erfindungsgemäß ist vorgesehen, dass im Rahmen einer neuen Kommunikationsbeziehung zwischen zwei Roaming Partnernetzen alle IR (International Roaming)-relevanten Daten ausgetauscht werden. Ab Beginn dieser Kommunikationsbeziehung wird zumindest auf dem Datenverarbeitungssystem des ersten Kommunikationsnetzwerks ein Logbuch geführt, in dem Änderungen betreffend den Inhalt der lokalen Datenbank eingetragen werden. Das Datenverarbeitungssystem erkennt anhand der Logbucheinträge vollautomatisch den erforderlichen Datenabgleich und führt diesen zwischen der internen Netzbetreiber-Datenbank und den Datenverarbeitungssystem des zweiten Kommunikationsnetz durch. Das Datenverarbeitungssystem kann weiterhin folgende Funktionen übernehmen:
- Änderungshistorie
- Erkennung der zu Benachrichtigenden Kommunikationsnetzwerke (welche von einer Datenänderung betroffen sind)
- Quittierungsfunktion
- Berechtigungsfunktionen (interne und externe Schnittstellen)
- Formatanpassung
- Fall-Back-Funktion (Versand per Email im Format Word®/Excel® für Kommunikationsnetzwerke ohne Datenverarbeitungssystem oder Störungsfälle)
- Benachrichtigungsfunktionen (Prozesssteuerung)
- Zeitgesteuerte Updates (Änderungstermin in der Zukunft)
- "Valid from"-Flag (Info über Update mit Berücksichtigung eines prozessspezifischen Vorlauf)
- Retry-Funktion / manuelle Sync-Funktion (für Störungsfälle)

Die Verwendung eines Logbuchs, welches auf dem ersten Datenverarbeitungssystem geführt wird, hat dabei den Vorteil, dass Änderungen über den Inhalt der ersten Datenbank, d. h. über Änderungen, Neuerstellung oder Löschen von Daten eines Datensatzes oder eines gesamten Datensatzes dokumentiert werden können, sowie automatisch recherchiert und in Abhängigkeit vorgebbarer Bedingungen an andere Netzbetreiber versendet werden können. Es ist damit ein automatisches Update der Daten fremder Netzwerkbetreiber ohne Vornahme manueller Zwischenschritte möglich. Der hohe Arbeitsaufwand bei der manuellen Einpflege der Daten wird dadurch reduziert und weiterhin hierdurch bedingte Fehlerquellen eliminiert. Die vom Netzwerkbetreiber angebotenen Servicedienstleistungen können somit in ihrer Qualität, Umsatzgröße und Kundenfreundlichkeit erheblich gesteigert werden.

Für den initialisierungsfall der ersten Datenbank kann vorgesehen werden, dass die erste Datenbank erstmalig mit Daten gefüllt wird, wobei in dem Logbuch noch kein Eintrag vorliegt. Diese Tatsache kann zum Anlass genommen werden, den gesamten relevanten Datenbankinhalt der ersten Datenbank an die in Partnerschaft befindlichen Betreiber anderer Kommunikationsnetze zu versenden, wobei ein leeres Logbuch auf die erstmalige Befüllung der ersten Datenbank mit neuen Datensätzen hinweisen kann.

Vorzugsweise kann eine Information betreffend die Datenversendung in das Logbuch eingetragen werden. Hierbei wird die Versendung von Daten an einen bestimmten Netzwerkbetreiber und der Erhalt dieser Daten (Quittierung) dokumentiert. Ein derartiger Eintrag kann vorzugsweise für jeden Fremdnetzwerkbetreiber gesondert erfolgen.

Der Datenaustausch erfolgt aus einer zentralen Datenbank des jeweiligen Kommunikationsnetzwerkes. Bei den ausgetauschten Daten handelt es sich um Planungungsdaten, welche sich bereits im Live-Betrieb oder sich im Planungsstatus befinden. Hierdurch ist es möglich, eine Dopplung, die bei gekürzten Daten vorkommen kann, oder eine Überschneidung mit anderen, insbesondere nationalen Netzdaten auszuschließen.

In einer vorteilhaften Weiterbildung kann die Information eine Angabe des Versendezeitpunktes und/oder die Angabe der konkret versendeten Daten umfassen. Auf diese Weise kann zu einem späteren Zeitpunkt eindeutig bestimmt werden, wann und welche Daten an einen bestimmten Fremdnetzwerkbetreiber gesendet worden sind. Die Angabe des Versendezeitpunktes kann dabei durch einen Zeitstempel erfolgen, welcher maßgeblich für die Bestimmung ist, welche Daten dem spezifischen Fremdnetzwerkbetreiber bereits übermittelt worden sind und welche nicht.

Vorzugsweise kann bei dem erfindungsgemäßen Verfahren vorgesehen sein, nur diejenigen Daten der ersten Datenbank zu übertragen, die im Rahmen einer Aktualisierung der ersten Datenbank geändert wurden, wobei anhand der Eintragungen im Logbuch erfindungsgemäß ermittelt werden kann, welche Daten nach der letzten Übermittlung an die zweite Datenbank geändert worden sind. Auf diese Weise wird erreicht, dass lediglich Delta-Daten versendet werden, d. h. solche Daten, die sich seit eines bestimmten, in der Vergangenheit liegenden Datenbestands geändert haben. Es wird dadurch vermieden, stets alle Daten eines Datensatzes zu übertragen, der auch Nicht-Delta-Daten aufweisen kann. Die Versendung der Daten kann dabei mit einer vorgebbaren Häufigkeit erfolgen. So kann beispielsweise vorgesehen werden, dass die veränderten Daten täglich an die Fremdnetzbetreiber übermittelt werden, wobei hierbei der Zeitstempel der letzten Versendung als Referenzzeitpunkt verwendet werden kann. Alternativ oder in Kombination kann vorgesehen werden, zu einem oder mehreren fest vorgebbaren Zeitpunkten Daten zu verwenden. Als Zeitpunkte könnten hierbei beispielsweise 0.00 Uhr eines jeden Tages oder der 1. und 15. eines jeden Monats gewählt werden. Weiterhin könnte alternativ oder zusätzlich eine Änderung des Inhalts der ersten Datenbank eine automatische Versendung der geänderten Daten bedingen. Da eine solche Datenversendung stets unmittelbar nach einer Änderung des Datenbankinhaltes erfolgt, wird hierdurch ein Höchstmaß an Aktualität der Daten der Fremdnetzbetreiber gewährleistet.

Es ist weiterhin vorteilhaft, die Versendung der Daten in ganzen Datensätzen vorzunehmen. Dies hat den Vorteil, dass im Falle der Änderung mehrerer Daten innerhalb eines Datensatzes nicht jede einzelne Änderung im Logbuch festgehalten werden muss, sondern lediglich die Tatsache einzutragen ausreicht, dass sich Daten innerhalb eines bestimmten Datensatzes geändert haben. Auf der Grundlage dieser Information kann dann der gesamte Datensatz an die Fremdnetzbetreiber gesendet werden und den veralteten Datensatz in der zweiten Datenbank ersetzen.

In einer besonders vorteilhaften Weiterbildung der Erfindung kann der Datenempfang von dem zweiten Datenverarbeitungssystem bestätigt und/oder protokolliert und eine Bestätigung oder ein Protokoll an das erste Verarbeitungssystem übermittelt werden. Auf diese Weise kann sichergestellt werden, dass die übermittelten Daten bei dem Fremdnetzwerkbetreiber angekommen sind und dieser über die vorgenommenen Änderungen im Datenbankinhalt der ersten Datenbank informiert ist. Eine Bestätigung kann in diesem Sinne die Information darstellen, dass Daten empfangen worden sind. Weiterhin kann ein Protokoll weitergehende Daten dahingehend aufweisen, dass es Angaben darüber enthält, welche konkreten Daten zu welchem Zeitpunkt empfangen worden sind oder welches Protokoll für die Kommunikationsverbindung verwendet worden ist.

In einer vorteilhaften Weiterbildung kann die Empfangsbestätigung und/oder der Inhalt des Protokolls von dem ersten Datenverarbeitungssystem in das Logbuch eingetragen werden. Hierdurch wird nachweislich der Empfang gesendeter Daten beim Fremdnetzwerkbetreiber dokumentiert und kann für spätere Überprüfungszwecke nachgesehen werden.

Sind die Kommunikationswege zu dem Fremdnetzwerkbetreiber und/oder das zweite Datenverarbeitungssystem technisch gestört, kann es vorkommen, dass die versendeten Daten beim Fremdnetzwerkbetreiber nicht empfangen werden.
Bleibt in diesem Falle eine Empfangsbestätigung des zweiten Datenverarbeitungssystems aus, kann eine erneute Versendung der Daten nach einem vorbestimmbaren Zeitintervall erfolgen. Dieses Zeitintervall kann mit dem Zeitpunkt beginnen, der durch den Zeitstempel im Logbuch eingetragen ist. Das Zeitintervall kann beliebig gewählt werden, beispielsweise eine oder mehrere Stunden betragen.

In einer vorteilhaften Weiterbildung kann nach wiederholter Versendung der Daten und bei Nichtempfang einer Empfangsbestätigung ein Sendefehlschlag in das Logbuch eingetragen werden. Mit diesem Eintrag kann bewirkt werden, dass die zu versendenden Daten auf einem anderen Kommunikationsweg dem Fremdnetzwerkbetreiber bereitgestellt werden. Hierbei kann vorgesehen werden, dass die zu versendenden Daten nach einem Sendefehlschlag per E-Mail oder Telefax an eine die zweite Datenbank verwaltende Verwaltungsstelle versendet werden. Auf diese Weise wird sichergestellt, dass auch im Falle dauerhaft gestörter Kommunikationsverbindungen zwischen den Netzwerkbetreibern ein Abgleich der beiden Datenbanken möglich ist.

In einer weiteren vorteilhaften Ausführungsvariante der Erfindung kann eine Änderung des Inhalts der ersten Datenbank in einem ersten Logbuch und Informationen betreffend die Versendung von Daten, den Erhalt von Empfangsbestätigungen und/ oder Protokollen in einem zweiten Logbuch eingetragen werden. Hierdurch kann eine Logbuchfunktion über interne Datenänderungen implementiert werden, mit welcher ein Abgleich des Inhalts der ersten Datenbank mit anderen netzinternen Datenbanken des Betreibers des ersten Kommunikationsnetzwerkes möglich ist, welche lediglich Teildatensätze verwalten, die von einzelnen Abteilungen des Netzwerkbetreibers dort eingepflegt werden. Mit Hilfe des internen Logbuchs können die Teildatensätze der verschiedenen Datenbanken der Abteilungen, die ebenfalls mit dem ersten Datenverarbeitungssystem verbunden sind, mit der ersten Datenbank abgeglichen werden, wobei die Teildatensätze in einem einzigen Datensatz in der ersten Datenbank gebündelt werden.

Die Kommunikation zwischen dem ersten und dem zweiten Datenverarbeitungssystem kann über ein internet-protokollfähiges Netzwerk, erfolgen..

In einer weiteren vorteilhaften Ausführungsvariante des erfindungsgemäßen Verfahrens können aus dem Datenbankbestand der ersten Datenbank in regelmäßigen Abständen Dokumente erstellt werden, in denen die Datenbankinhalte protokolliert werden. Diese Dokumente können IR.21 Dokumenten entsprechen. Einem derart automatisch erstellten Dokument kann eine Versionsnummer zugewiesen werden, welche eine Aussage über die Aktualität des Dokumentes, beispielsweise über seinen Erstellungszeitpunkt bzw. Aktualität, Aufschluss gibt.

Weiterhin kann in einer vorteilhaften Weiterbildung der Erfindung nach einem Abgleich der beiden Datenbanken eine Nachricht an eine die zweite Datenbank verwaltende Verwaltungsstelle versendet werden. Der Fremdnetzwerkbetreiber wird dadurch automatisch umfassend über vorgenommene Aktualisierungen der Datenbank informiert.

Weiterhin können die zur Versendung vorgesehenen Daten in eine Liste eingetragen werden, und die Liste in einem Dokument an das zweite Datenbankverarbeitungssystem versendet werden. Dies gewährleistet eine Abwärtskompatibilität zu den Fremdnetzwerkbetreibern, die nicht über ein Datenverarbeitungssystem verfügen, welches die versendeten Daten empfangen, den Empfang quittieren und in die Datenbank des Fremdnetzwerkbetreibers speichern kann.

In einer vorteilhaften Weiterbildung können die sich im Vergleich zu anderen Daten veränderte Daten in der Liste markiert werden. Dies erleichtert dem Fremdnetzwerkbetreiber die Erkennung von Delta-Daten innerhalb der Liste.

Erfindungsgemäß kann das Verfahren zum Abgleich von Netzdaten, insbesondere Roaming-Daten und/oder Routing-Daten, zwischen mindestens zwei Datenbanken in automatischer Weise mittels eines Computerprogrammprodukts durchgeführt werden, wobei dieses ein auf einem Speicher des ersten Datenverarbeitungssystems gespeichertes Computerprogramm mit Softwaremitteln zur Durchführung des Verfahrens aufweist, wenn das Computerprogramm auf dem ersten Datenverarbeitungssystem ausgeführt wird. Das Computerprogramm des Computerprogrammproduktes kann dabei Softwaremittel aufweisen, die zur Durchführung der einzelnen Verfahrensschritte eingerichtet sind.

Weiterhin kann ein weiteres Computerprogrammprodukt vorgesehen sein, welches die Bearbeitung empfangener Daten, deren Speicherung in der zweiten Datenbank sowie die Quittierung und Protokollierung des Datenempfangs bei dem Fremdnetzwerkbetreiber durchführt. Dieses Computerprogrammprodukt kann ein auf einem Speicher des zweiten Datenverarbeitungssystems gespeichertes Computerprogramm mit Softwaremitteln aufweisen, die zur Durchführung der das zweite Datenverarbeitungssystem betreffenden Verfahrensschritte eingerichtet sind, wenn das Computerprogramm auf dem zweiten Datenverarbeitungssystem ausgeführt wird.

Ein weiterer Aspekt der Erfindung ist es, ein Kommunikationssystem zum Abgleich von Netzdaten, insbesondere Roaming-Daten und/ oder Routing-Daten, zwischen mindestens zwei Datenbanken zur Verfügung zu stellen, umfassend eine erste Datenbank und ein erstes Datenverarbeitungssystem, welches mit der ersten Datenbank verbunden und einem ersten Kommunikationsnetzwerk zugeordnet ist, eine zweite Datenbank und ein zweites Datenverarbeitungssystem, welches mit der zweiten Datenbank verbunden und einem zweiten Kommunikationsnetzwerk zugeordnet ist, wobei das erste und das zweite Datenverarbeitungssystem über eine Kommunikationsverbindung miteinander verbunden sind, und wobei in der ersten Datenbank in Datensätzen gehaltene Netzdaten hinterlegt sind und zum Abgleich mit der zweiten Datenbank bereitstehen, wobei das erste Datenverarbeitungssystem Mittel zur Führung eines Logbuchs aufweist, in das Änderungen betreffend den Inhalt der ersten Datenbank eintragbar sind, und dass das erste Datenverarbeitungssystem Mittel zur Versendung von Daten aufweist, wobei das zweite Datenverarbeitungssystem Mittel zum Empfang der Daten und Mittel zu deren Hinterlegung in der zweiten Datenbank aufweist.

Weitere Merkmale und Vorteile des erfindungsgemäßen Verfahrens sowie der erfindungsgemäßen Computerprogrammprodukte und dem Kommunikationssystem können der nachfolgenden Beschreibung von Ausführungsbeispielen entnommen werden.

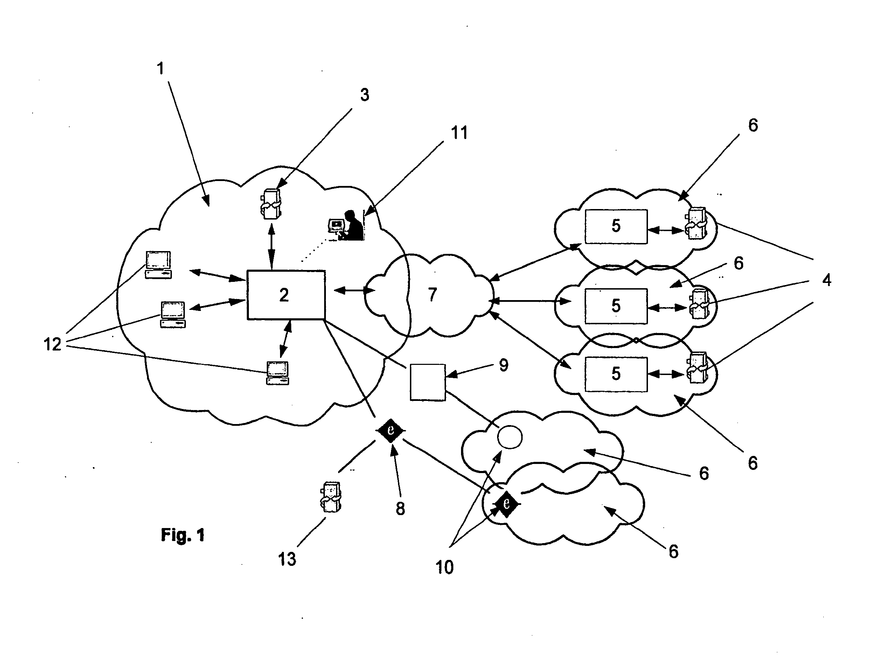

Fig. 1 zeigt eine grafische Darstellung der in Kommunikationsverbindung stehenden Elemente, die für den Abgleich von Roaming-Daten und/oder Routing-Daten zwischen zwei Datenbanken erforderlich sind.

Dabei ist eine erste lokale Datenbank 3 mit einem ersten Datenverarbeitungssystem 2 verbunden, welches einem ersten Kommunikationsnetzwerk 1 zugeordnet ist. Das Kommunikationsnetzwerk 1 ist gemäß dieser Ausführungsvariante durch ein Mobilfunknetzwerk gebildet, wobei in der ersten lokalen Datenbank 3 Roaming-Daten eines in dem Mobilfunknetzwerk beheimateten Kommunikationsendgerätes, insbesondere eines Mobiltelefons hinterlegt sind. Roaming-Daten können von dem Datenverarbeitungssystem 2 auf der Datenbank 3 hinterlegt werden und von diesem auch abgerufen werden. Das Datenverarbeitungssystem 2 ist dabei als Server ausgebildet, auf welchem ein Programm abläuft, nachfolgend als Agent bezeichnet, das die Datenhinterlegung und den Datenzugriff steuert. Der Agent wird dabei von einem Programmverantwortlichen 11 überwacht. Die Roaming-Daten werden von unterschiedlichen verantwortlichen Abteilungen mittels entfernten Eingabegeräten 12 bereitgestellt, wobei die Abteilungen insbesondere IT-Verantwortliche, Global-Title-Verantwortliche und SMSC- (Short Message Service Center) Verantwortliche umfassen. Durch den Agenten erfolgt eine interne Synchronisierung der lokalen Datenbank 3 mit den aktuellen Netzdaten, die dem Datenverarbeitungssystem 2 über die Eingabeeinrichtungen 12 mitgeteilt werden. Weiterhin kann auch ein manueller Abgleich der lokalen Datenbank unmittelbar durch einen Datenbankverantwortlichen erfolgen. Die interne Synchronisierung und das Bereitstellen der Roaming-Daten erfolgt über ein adaptierbares, internes Übertragungsprotokoll.

Die Datenbank 3 kann dabei auch Roaming-Daten enthalten, die ein Kommunikationsendgerät betreffen, welches in einem fremden Kommunikationsnetzwerk 6 beheimatet ist, und sich im geografischen Funktionsbereich des Kommunikationsnetzwerkes 1 bewegt und dieses Netzwerk für abgehende oder eingehende Anrufe und/oder elektronische Nachrichten verwendet.

Die Kommunikationsnetzwerke 6 anderer Netzwerkanbieter weisen ebenfalls jeweils ein Datenverarbeitungssystem 5 auf, welches mit einer entsprechenden lokalen Datenbank 4 verbunden ist, die Roaming-Daten über die in dem entsprechenden Fremdnetzwerk 6 beheimateten Kommunikationsendgeräte enthalten. Die Datenverarbeitungssysteme 5 können hierbei ebenfalls durch einen Server gebildet sein, auf welchem jeweils ein Agent läuft, der die Datenverarbeitung, Datenbeschaffung und -hinterlegung in den Datenbanken 4 automatisiert vornimmt. Der Agent wird dabei ebenfalls von einem Programmverantwortlichen überwacht und die Roaming-Daten von unterschiedlichen verantwortlichen Abteilungen mittels entfernten Eingabegeräten bereitgestellt. Auch hier erfolgt durch den jeweiligen Agenten des Fremdnetzwerks 6 eine interne Synchronisierung der jeweiligen lokalen Datenbank 4 mit den jeweiligen aktuellen Fremdnetzdaten. Die interne Synchronisierung und das Bereitstellen der Roaming-Daten erfolgt über ein adaptierbares, internes Übertragungsprotokoll.

Für einen Abgleich der Datenbanken 3 und 4 sind das erste Datenverarbeitungssystem 2 und das zweite Datenverarbeitungssystem 5 eines entsprechenden Fremdnetzwerkes 6 über ein internationales Kommunikationsnetz 7 verbunden, welches im vorliegenden Falle als internet-protokollfähiges -Netzwerk ausgebildet ist. Über dieses erfolgt der automatische Datenabgleich zwischen den lokalen Datenbanken 3, 4 über die Datenverarbeitungssysteme 2, 5 mittels eines standardisierten, netzübergreifenden Übertragungsprotokolls.

Wird der Datenbankinhalt der Datenbank 3 durch eine der Abteilungen 12 geändert, wobei eine Änderung das Anlegen eines neuen Datensatzes, eine Abänderung oder gar ein Löschen eines bestehenden Datensatzes, oder auch nur die Neuerstellung, Abänderung oder Löschung einzelner Daten eines Datensatzes umfassen kann, erfolgt dies durch Zugriff auf das Datenverarbeitungssystem 2 mittels der entfernten Eingabeeinrichtungen 12 über den auf dem Datenverarbeitungssystem 2 laufenden Agenten, welcher wiederum den Zugriff auf die Datenbank 3 steuert. Der Agent weist damit zwei Schnittstellen auf. Eine erste Schnittstelle zum Heimnetzbetreiber, um auf die in der ersten Datenbank 3 befindlichen Daten zugreifen zu können, und eine zweite Schnittstelle zu dem Fremdnetzwerkbetreiber, damit Daten an diesen gesendet werden können.

Eine an der ersten Datenbank 3 vorgenommene Änderung wird in einem Logbuch hinterlegt, welches in einem Speicher des Datenverarbeitungssystems 2 abgelegt ist. Die Logbucheintragung umfasst dabei den Zeitpunkt der Änderung und die Angabe derjenigen Daten oder Datensätze, an denen Änderungen vorgenommen worden sind, vorzugsweise mit Angabe der konkreten Daten. Das Logbuch spiegel damit den aktuellen Datenbankinhalt wieder. Durch einen Zugriff des Agenten auf das Logbuch wird diesem das Wissen über den Datenbankbestand bereitgestellt. Er kann folglich als "intelligent" bezeichnet werden, da er den Status der ersten Datenbank 3 zu jeder Zeit kennt.

Für einen Abgleich der Datenbank 3 mit den Datenbanken 4 erfolgt eine Versendung der geänderten Daten von dem Datenverarbeitungssystem 2 über das Kommunikationsnetzwerk 7 zu den Datenverarbeitungssystemen 5 der Fremdnetzwerkbetreiber. Die Versendung kann dabei anhand einer Empfängerliste erfolgen, in welcher die Empfänger der geänderten Daten samt entsprechenden Adressen eingetragen sind. Die Liste kann dabei ebenfalls auf dem Datenverarbeitungssystem 2 hinterlegt sein.

Es kann vorgesehen werden, die geänderten Daten zu einem vorbestimmten Zeitpunkt, beispielsweise zum 1. und 15. eines jeden Monats, oder täglich zu einer bestimmten Uhrzeit zu versenden. Bis zu einem solchen Zeitpunkt würden Änderungen an dem Datenbankinhalt der Datenbank 3 in dem Logbuch dokumentiert und dann mit einem "Versandvermerk" abgeschlossen werden. Alternativ kann vorgesehen werden, dass Datenbankänderungen unverzüglich den anderen Netzwerkbetreibern mitgeteilt werden.

Für die Versendung der Daten wird von dem auf dem ersten Datenverarbeitungssystem 2 laufenden Agenten zunächst in dem Logbuch überprüft, welche Daten sich seit der letzten Versendung an einem bestimmten Fremdnetzbetreiber in der Datenbank 3 geändert haben. Sind diese anhand der Eintragungen im Logbuch ermittelt, greift der Agent auf die entsprechenden Roaming-Daten in der Datenbank zu und versendet diese über eine Kommunikationsverbindung 7 gemäß der in der Empfängerliste aufgeführten Fremdnetzwerkbetreiber an die Datenverarbeitungssysteme 5, wo sie von den dort laufenden Agenten empfangen und in den Datenbanken 4 hinterlegt werden. Ein Agent eines Datenverarbeitungssystems 5 quittiert den Empfang und sendet eine Empfangsbestätigung über das Netzwerk 7 zurück an den Agenten des ersten Datenverarbeitungssystems 2. Dieser trägt den bestätigten Empfang vorzugsweise mitsamt eines Zeitstempels und der konkret empfangenen Daten in das Logbuch ein.

Auch im zweiten Datenverarbeitungssystem 5 kann ebenfalls ein Logbuch geführt werden, in das die auf den zweiten Datenverarbeitungssystemen laufenden Agenten ihrerseits den Empfang mitsamt Zeitstempel und Angabe der konkret empfangenen Daten in einem Logbuch dokumentieren. Als Übertragungsformat kann bei dem Übertragungsvorgang der geänderten Daten ein sicheres Format gewählt werden, beispielsweise SFTP.

In jedem Agent 2 soll vorgegeben sein, welche Netzwerke einen Agent 5 besitzen und nutzen. Des Weiteren werden die gegebenenfalls unterschiedlichen Schnittstellen vorgegeben. Der Agent 2 wird immer den anderen Agenten 5, falls verfügbar, als Primärschnittstelle wählen. Der Agent hat weitere Schnittstellen, um über e-Mail 8 bzw. Fax 9 Kommunikations-netzwerke ohne Agent zu erreichen und mit den eigenen Daten zu beliefern. Diese zwei Optionen gehören zu den Fall-back Möglichkeiten. Der Agent 2 überprüft beim Versenden von eigenen Netzwerkdaten, ob ein empfangender Agent 5 aktiv ist. Falls nicht, kann eine der Fall-back Schnittstellen gewählt werden. Die Fall-back Schnittstellen können auch für den Fall einer nichterfolgreichen Datenübertragung gewählt werden.

Erhält der Agent des ersten Datenverarbeitungssystems 2 keine Empfangsbestätigung, wird der Sendevorgang wiederholt. Hierbei können Daten, die sich nach der ersten Versendung geändert haben, zusätzlich berücksichtigt werden. Erfolgt auch nach einem zweiten Versendeversuch aufgrund einer anhaltenden Störung in den Kommunikationswegen oder bei dem Fremdnetzwerkbetreiber keine Empfangsbestätigung, versendet der Agent die zu versendenden Daten per Fax 9 oder per E-Mail 8 an eine Verwaltungsstelle 10 des Betreibers des anderen Kommunikationsnetzwerkes 6. Die Daten können bei einer E-Mail-Versendung in einem Mailserver 13 gespeichert bzw. zwischengespeichert werden. Auf diese Weise wird gewährleistet, dass auch im Falle von Störungen die Betreiber der fremden Netzwerke über Änderungen in der Datenbank 3 unterrichtet werden und keine Daten verloren gehen. Vielmehr stellt die erste Datenbank ein Back-Up System dar, weiches die Daten im Störungsfall weiterhin verfügbar hält (= Mail-Server Funktionalität).

In entsprechender Weise ist vorgesehen, dass Änderungen des Inhalts der Datenbank 4 von einem auf dem zweiten Datenverarbeitungssystem 5 laufenden Agenten über eine Kommunikationsverbindung 7 dem Agenten des ersten Datenverarbeitungssystems 2 mitgeteilt werden, welcher den Empfang der Daten bestätigt, eine entsprechende Eintragung in das Logbuch vornimmt und die Daten in der Datenbank 3 hinterlegt. Auf diese Weise wird ein zuverlässiger automatischer Austausch von Roaming-Daten respektive ein Abgleich der Datenbanken 3 und 4 erreicht, so dass jedem das erfindungsgemäße Verfahren nutzende Netzwerkbetreiber aktuelle Roaming-Daten zur Verfügung gestellt werden können.

Bei einer vergleichsweise großen Anzahl an Aktualisierungen an einer der beiden Datenbanken 3 oder 4 kann dabei ein Abgleich in kürzeren Zeitintervallen erfolgen, sofern für einen Abgleich feste Zeitintervalle festgelegt werden. Sich häufig ändernde Daten, d. h. sogenannte Delta-Daten können dabei mit einer höheren Häufigkeit übertragen werden als andere Daten. Dabei ist insbesondere eine tägliche Versendung zu empfehlen.

Die auf den Datenverarbeitungssystemen 2, 5 laufende Agenten erfüllen folglich Logbuchfunktionen und die Datenübertragung betreffende Steuerungsfunktionen. Weiterhin kontrollieren sie Berechtigungen, bearbeiten Berechtigungsanfragen und verwalten eine Änderungshistorie.

Einer der wichtigsten Neuerungen des erfindungsgemäßen Verfahrens ist es, dass jeder Netzbetreiber einen eigenen Agenten hat und nutzt und der Agent selbst die Plan- bzw. Wirknetzdaten an die anderen IR-Partner und Agentennutzer verteilt. Jeder Agent funktioniert unabhängig und autonom.

Der Agent hat weiterhin noch u.a. folgende Spezifika:
Der Agent ist eine Software, welche unterschiedliche Schnittstellen ('SQL', 'SMNP', 'Q3', usw.) unterstützt. Diese Schnittstellen können vom lokalen Betriebssystem bzw. der lokalen Datenbank der Netzbetreiber zum internen Datenaustausch genutzt werden. Somit ist diese Software für nahezu alle Netzbetreiber nutzbar.

Jeder Netzbetreiber kann seinen eigenen Agenten nutzen um Gesamt- bzw. Delta-Daten von anderen Netzen erhalten zu können.

Jeder Netzbetreiber ist für die Sicherheitseinstellungen und Zugriffsrechte selbst verantwortlich und kann diese frei konfigurieren.

Der Datenaustausch geschieht in üblichen, kann jedoch auch in unterschiedlichen Formaten geschehen. Der empfangende Agent, kann über Konfigurationseinstellungen gewisse Parameter mit der lokalen bzw. eigenen Planungsdatenbank austauschen.

Der Agent verfügt über ein Logbuch für die Quittierung der versendeten Delta Daten bei Erhalt bzw. zur Protokollierung der empfangenen Daten.

Der Agent hat ein Back-up für die anderen Nutzer, wo der Agent über eine gewisse Zeitspanne nicht aktiv ist.

Datenversand zu anderen Agent-Nutzern findet direkt über IP statt. Zu 'nicht Agent-Nutzern' findet der Versand über e-Mail und in Ausnahmefällen über einen Fax-Anschluss statt.

Der Agent besitzt Einstellmöglichkeiten zum Datenversand wie Häufigkeit, Kommunikations- und Nutzerberechtigungen, Zeitpunkt, Flag-Erkennung, wie Daten zum Export über den Agenten in der jeweiligen Datenbank eingetragen worden sind, Art der Daten, evtl. andere Versandweise der Daten.

Eine Einteilung der Daten der Datenbanken in sog. Clustertypen (z.B. GPRS/IP, (M)GT-s, Netzelementadressierungs-GT, usw.) und Zuordnung interner Zuständigkeiten bzw. Accounts zur Pflege der Delta-Daten kann vorgesehen werden.

Die Logbuchfunktion erfasst alle internen Datenänderungen.

Kompatibilität zur bisherigen Verfahrensweise ist durch automatische Erstellung der herkömmlichen Dokumente (IR.21, AA.14, usw.) mit automatischer Vergabe von Versionsnummern möglich.

Als Internationales Medium zum Austausch der Daten kann das Internet (IP) bzw. ein GRX-Netz verwendet werden.

Bevorzugte Formate für die Datenübertragung sind sichere Internetprotokolle, wie z. B. SFTP.

Jeder Netzbetreiber bleibt für die übertragenen Daten verantwortlich, wie das auch jetzt mit den Einträgen bei der GSMA der Fall ist. Ein wesentlicher Vorteil des Agenten ist, dass ein Datenabgleich nahezu jeden Tag (unter 'Einstellmöglichkeiten'/'Häufigkeit') möglich ist. Hierdurch kann ein Großteil der Probleme, welche durch verspätete Updates nach dem Stand der Technik zustande kommen, zukünftig vermieden werden. Bei einem eingeschalteten Agenten werden alle empfangenen Daten quittiert, protokolliert und in einer Datenbank abgelegt. Zusätzlich kann ein Updatehinweis an den Datenverantwortlichen innerhalb des Heimatnetzes bzw. des eigenen Netzes verschickt werden.

Die Daten werden in einzelnen Datensätzen ausgetauscht und nicht dokumentbezogen, wie dies gemäß Stand der Technik durchgeführt wird, und können logischen Bereichen, z.B. Netzbetreiber, GPRS-Daten, Ansprechpartner) oder herkömmlichen Dokumenttypen, z.B. AA.14, IR.21, IR.35, usw., zugeordnet werden. Da lediglich ein Update der Delta-Daten erforderlich ist, müssen in der Regel keine großen Datenmengen übertragen werden.

Die IR-Daten werden durch den IR-Agenten nach drei Verfahren an die IR-Partner versandt (weltweit):
1. alle Daten des eigenen Netzes.
   Manuell oder als Sonderfall in der Konfiguration <Einstellungen Datenaustausche>.
2. nur die Delta-Daten des eigenen Netzes (automatisch)
3. Proiektierte Daten

Bei Punkt 1. sind die Gesamtdaten für neue Nutzer des Agenten gedacht, um bei Inbetriebnahme die neue IR-Agent-Datenbank zu befüllen. Hierbei ist auch an andere Gegebenheiten zu denken, beispielsweise andere Systemtechniken, welche es notwendig machen, stets alle Daten mit den neuen Gesamtdaten zu überschreiben.

Bei Punkt 2. beziehen sich die Delta-Daten immer auf den zuletzt bekannten Datenstand gemäß Logbuch des jeweiligen Agent-Nutzers. Ein Logbuch erfasst die letzten Datenübertragungen zum Nutzer des fremden Agenten mit einem Zeitstempel, beispielsweise über IP-Adressierung. Anhand dieses Zeitstempels des anderen Nutzers wird die Abfrage in der ersten Datenbank (3) bzw. mehrerer dezentraler Datenbanken gebildet und automatisch gestartet. Somit werden immer die letzten und aktuellen Delta-Daten des Wirknetzes bzw. Mobilfunknetzes, gegebenenfalls einschließlich von Plandaten für diesen Netzbetreiber herausgegeben.

Gemäß Punkt 3. ist es in einem speziellen Datenbankbereich zusätzlich möglich projektierte Daten auszutauschen. Änderungen mit großer Auswirkung, beispielsweise neue E.214-MGT, werden häufig vorab angekündigt und für eine Einführungszeit parallel zum "alten" Datenstand geführt.

Für Netze, die zwar einen Agenten haben, aber diesen temporär nicht nutzen können, z.B. bei Internet- oder Software-Störungen, kann das erfindungsgemäße Verfahren als eine Back-up Lösung fungieren. Der Agent des Betreibers des ersten Kommunikationsnetzwerks verschickt seine Gesamt- & Delta-Daten an allen anderen Agenten. Nach mehrfachen erfolglosen Versuchen kommt es im vorgenannten Logbuch zum Eintrag, dass die Daten des anderen Agenten nicht erhalten wurden. in diesem Fall sorgt ein vorgegebener Zeitfaktor dafür, dass die Daten als e-Mail Nachricht oder per Fax an den Ansprechpartner des IR-Partnernetzes geschickt werden, in der Regel an den Agent-Verantwortlichen.

Für IR-Partner, die keinen Agenten haben und somit nutzen, kann das Verschicken der Abgleichdaten per E-Mails erfolgen.

Die Daten des eigenen Plan- bzw. Wirknetzes sollen, in solchen Fällen, über den Agenten in einer Microsoft® Excel®-Liste oder Microsoft® Word-Dokument übertragen werden. Hierbei kann das aktuelle Dokumentenformat (z.B. IR.21-Format) als Vorlage verwendet werden. Der Agentenverwalter entscheidet anhand des internen Logbuchs, welches vorliegende interne Änderungen der Verantwortlichen aller Info-Cluster enthält, ob ein Update an die Roaming-Partner verschickt werden soll. Bevorzugt wird eine Excel®-Liste, da hiermit technische Daten besser abgebildet werden können und den Transfer der Daten in Datenbanken erleichtert ist.

Der Agent vergibt automatisch die neue Versionsnummer des jeweiligen Dokuments, aktualisiert das Datum des Dokuments, markiert die Delta-Daten und versendet es anhand einer Empfängerliste an die Roaming-Partner, nicht-Agent Nutzer und gegebenenfalls zusätzlich an die GSMA-Datenbank. Als Versandart können vorzugsweise e-Mail Nachrichten genutzt werden, gegebenenfalls kann auch ein Faxversand gewählt werden.

Die genannten Mängel sowie auch die Vorteile, welche sich durch den Einsatz eines Agenten zum Austausch von Planungsdaten erzielen lassen, treffen auch für den internationalen Festnetzbereich zu. Auch hier werden derzeit in ähnlicher Weise Daten manuell gepflegt und ausgetauscht. Dies führt auch hier zu den bereits erwähnten Nachteilen eines solchen Verfahrens.

Somit stellt der Einsatz eines Agenten für automatischen Abgleich von Planungsdaten ein universelles und innovatives Instrument dar, welche im Bereich des "internationalen Austauschs von dynamischen Konfigurationsdaten" eingesetzt werden kann. Ein Bedarf besteht hierzu sowohl im Mobil- als auch im Festnetzbereich. Durch die zu erwartene höhere ümsatzeinnahme und den zusätzlich geringer werdenden Ressourcenbedarf für die Einrichtung und Pflege der IR-relevanten Netzdaten, werden Agenten schnell Verbreitung bei den Netzbetreibern finden.

Ein erheblicher Mehrwert kann bereits bei einer relativ niedrigen Agenten-Verfügbarkeit erzielt werden. Dieser Mehrwert resultiert in einer enormen Aufwandsminimierung seitens der Netzplanung, einer deutlichen Steigerung der Qualität und des Umsatzes im Bereich Roaming- und SMS-Interworking durch zeitnahe Implementierung und Beseitigung von Service-Beeinträchtigungen aufgrund fehlender Konfigurationsdaten, und in einer Fehler-Reduzierung durch eine automatische Datenverarbeitung, da keine manuelle Datenerfassung bzw. Weiterverarbeitung der Daten notwendig ist.

Aufgrund des impliziten Multiplikatoreneffekts der erfindungsgemäßen "Plattform-Lösung" wird nach Erreichen einer kritischen Masse der Mehrwert für jeden Benutzer multipliziert ansteigen.

## Patentansprüche

1. Verfahren zum automatischen Abgleich von Netzdaten zwischen Kommunikationsnetzwerken verschiedener Netzbetreiber, insbesondere von Roaming-Daten und/oder Routing-Daten, zwischen mindestens zwei Datenbanken (3, 4), wobei eine erste Datenbank (3) mit einem ersten Datenverarbeitungssystem (2) verbunden ist und das erste Datenverarbeitungssystem (2) einem ersten Kommunikationsnetzwerk (1) zugeordnet ist, eine zweite Datenbank (4) mit einem zweiten Datenverarbeitungssystem (5) verbunden ist und das zweite Datenverarbeitungssystem (5) einem zweiten Kommunikationsnetzwerk (6) zugeordnet ist, wobei das erste und das zweite Datenverarbeitungssystem (2, 5) über eine Kommunikationsverbindung (7, 8, 9) miteinander verbunden sind, und wobei in der ersten Datenbank (3) in Datensätzen gehaltene Netzdaten hinterlegt und zum Abgleich mit der zweiten Datenbank (4) bereitgestellt werden, wobei auf dem ersten Datenverarbeitungssystem (2) ein Logbuch geführt wird, in dem Änderungen betreffend den Inhalt der ersten Datenbank (3) eingetragen werden, wobei in Abhängigkeit eines Logbucheintrages eine Übermittlung von Daten betreffend die Änderung zumindest eines Datensatzes von dem ersten Datenverarbeitungssystem (2) zu dem zweiten Datenverarbeitungssystem (5) erfolgt und die übermittelten Daten in der zweiten Datenbank (4) hinterlegt werden, **dadurch gekennzeichnet, dass** auf den Datenverarbeitungssystemen (2, 5) jeweils ein Programm als unabhängig und autonom funktionierender Agent betrieben wird, der die Datenhinterlegung und den Datenzugriff steuert und mittels dessen eine interne Synchronisierung der jeweiligen Datenbank (3, 4) mit den aktuellen Netzdaten erfolgt, wobei der auf dem ersten Datenverarbeitungssystem (2) laufende Agent eine erste Schnittstelle für den Zugriff auf die in der ersten Datenbank (3) befindlichen Daten, und eine zweite Schnittstelle zu einem Fremdnetzwerkbetreiber zur Versendung der Daten an diesen aufweist, wobei der auf dem ersten Datenverarbeitungssystem (2) laufende Agent zunächst in dem Logbuch prüft, welche Daten sich seit der letzten Versendung an den Fremdnetzwerkbetreiber in der ersten Datenbank (3) geändert haben und dieser Agent auf die Daten in der ersten Datenbank (3) zugreift und diese über die Kommunikationsverbindung (7, 8, 9) an das zweite Datenverarbeitungssystem (5) versendet, wo sie von dem dort laufenden Agenten empfangen und in der zweiten Datenbanken (4) hinterlegt werden.

2. Verfahren nach Anspruch 1, **dadurch gekennzeichnet, dass** eine Information betreffend die Datenversendung in das Logbuch eingetragen wird.

3. Verfahren nach Anspruch 2, **dadurch gekennzeichnet, dass** die Information eine Angabe des Versendezeitpunktes und/ oder die Angabe der versendeten Daten umfasst.

4. Verfahren nach einem der vorherigen Ansprüche, **dadurch gekennzeichnet, dass** nur diejenigen Daten der ersten Datenbank (3) übertragen werden, die im Rahmen einer Aktualisierung dieser Datenbank (3) geändert wurden, wobei anhand der Eintragungen im Logbuch ermittelt wird, welche Daten nach der letzten Übermittlung an die zweite Datenbank (4) verändert worden sind.

5. Verfahren nach einem der vorherigen Ansprüche, **dadurch gekennzeichnet, dass** die Versendung mit einer vorgebbaren Häufigkeit, zu einem oder mehreren vorgebbaren Zeitpunkten oder unmittelbar nach einer Änderung des Inhalts der ersten Datenbank (3) erfolgt.

6. Verfahren nach einem der vorherigen Ansprüche, **dadurch gekennzeichnet, dass** die Versendung der Daten in ganzen Datensätzen erfolgt.

7. Verfahren nach einem der vorherigen Ansprüche, **dadurch gekennzeichnet, dass** der Datenempfang von dem zweiten Datenverarbeitungssystem (5) bestätigt und/ oder protokolliert wird und eine Bestätigung oder ein Protokoll an das erste Datenverarbeitungssystem (2) übermittelt wird.

8. Verfahren nach Anspruch 7, **dadurch gekennzeichnet, dass** die Empfangsbestätigung und/oder der Protokollinhalt von dem ersten Datenverarbeitungssystem (2) in das Logbuch eingetragen werden.

9. Verfahren nach einem der vorherigen Ansprüche, **dadurch gekennzeichnet, dass** bei einem Ausbleiben einer Empfangsbestätigung des zweiten Datenverarbeitungssystems (5) eine erneute Versendung der Daten nach einem vorbestimmbaren Zeitintervall erfolgt.

10. Verfahren nach Anspruch 9, **dadurch gekennzeichnet, dass** sich der Beginn des Zeitintervalls nach dem in dem Logbuch eingetragenen Zeitpunkt der Versendung der zuvor an das zweite Datenverarbeitungssystem (5) übermittelten Daten bestimmt.

11. Verfahren nach Anspruch 9 oder 10, **dadurch gekennzeichnet, dass** nach wiederholter Versendung der Daten und bei Nichtempfang einer Empfangsbestätigung ein Sendefehlschlag in das Logbuch eingetragen wird, wobei die zu versendenden Daten nach einem Sendefehlschlag über ein anderes Medium, insbesondere per E-Mail (8) oder per Telefax (9), an eine die zweite Datenbank (4) verwaltende Verwaltungsstelle (10) versendet werden.

12. Verfahren nach einem der vorherigen Ansprüche, **dadurch gekennzeichnet, dass** eine Änderung des Inhalts der ersten Datenbank (3) in einem ersten Logbuch und die Versendung von Daten oder der Erhalt von Empfangsbestätigungen oder Protokollen versendeter Daten in einem zweiten Logbuch eingetragen werden.

13. Verfahren nach einem der vorherigen Ansprüche, **dadurch gekennzeichnet, dass** aus dem Datenbankbestand der ersten Datenbank (3) in regelmäßigen Abständen Dokumente erstellt werden, in denen die Datenbankinhalte protokolliert werden.

14. Verfahren nach einem der vorherigen Ansprüche, **dadurch gekennzeichnet, dass** nach einem Abgleich der Datenbanken (3, 4) eine Nachricht an eine die zweite Datenbank (4) verwaltende Verwaltungsstelle gesendet wird.

15. Verfahren nach einem der vorherigen Ansprüche, **dadurch gekennzeichnet, dass** die zur Versendung vorgesehen Daten in eine Liste eingetragen werden und die Liste in einem Dokument an das zweite Datenverarbeitungssystem (5) versendet wird.

16. Verfahren nach Anspruch 15, **dadurch gekennzeichnet, dass** die sich im Vergleich zu anderen Daten verändernden Daten in der Liste markiert werden.

17. Computerprogrammprodukt zum Abgleich von Netzdaten zwischen Kommunikationsnetzwerken verschiedener Netzbetreiber, insbesondere Roaming-Daten und/ oder Routing-Daten, zwischen mindestens zwei Datenbanken (3, 4), wobei eine erste Datenbank (3) mit einem ersten Datenverarbeitungssystem (2) verbunden ist und das erste Datenverarbeitungssystem (2) einem ersten Kommunikationsnetzwerk (1) zugeordnet ist, eine zweite Datenbank (4) mit einem zweiten Datenverarbeitungssystem (5) verbunden ist und das zweite Datenverarbeitungssystem (5) einem zweiten Kommunikationsnetzwerk (6) zugeordnet ist, wobei das erste und das zweite Datenverarbeitungssystem (5, 6) über eine Kommunikationsverbindung (7, 8, 9) miteinander verbunden sind, und wobei in der ersten Datenbank (3) in Datensätzen gehaltene Netzdaten hinterlegt sind und zum Abgleich mit der zweiten Datenbank (4) bereitgestellt werden, **dadurch gekennzeichnet, dass** es ein auf einem Speicher des ersten Datenverarbeitungssystems (2) gespeichertes Computerprogramm mit Softwaremitteln zur Durchführung des Verfahrens nach einem der Ansprüche 1 bis 16 aufweist, wenn das Computerprogramm auf dem ersten Datenverarbeitungssystem (2) ausgeführt wird.

18. Computerprogrammprodukt zum Abgleich von Netzdaten zwischen Kommunikationsnetzwerken verschiedener Netzbetreiber, insbesondere Roaming-Daten und/ oder Routing-Daten, zwischen mindestens zwei Datenbanken (3, 4), wobei eine erste Datenbank (3) mit einem ersten Datenverarbeitungssystem (2) verbunden ist und das erste Datenverarbeitungssystem (2) einem ersten Kommunikationsnetzwerk (1) zugeordnet ist, eine zweite Datenbank (4) mit einem zweiten Datenverarbeitungssystem (5) verbunden ist und das zweite Datenverarbeitungssystem (5) einem zweiten Kommunikationsnetzwerk (6) zugeordnet ist, wobei das erste und das zweite Datenverarbeitungssystem (5, 6) über eine Kommunikationsverbindung (7, 8, 9) miteinander verbunden sind, und wobei in der ersten Datenbank (3) in Datensätzen gehaltene Netzdaten hinterlegt sind und zum Abgleich mit der zweiten Datenbank (4) bereitgestellt werden, **dadurch gekennzeichnet, dass** es auf einem Speicher des zweiten Datenverarbeitungssystems (5) gespeichertes Computerprogramm mit Softwaremitteln zur Durchführung des Verfahrens nach einem der Ansprüche 7 bis 16 aufweist, wenn das Computerprogramm auf dem zweiten Datenverarbeitungssystem (5) ausgeführt wird.

19. Kommunikationssystem zum Abgleich von Netzdaten, insbesondere Roaming-Daten und/ oder Routing-Daten, zwischen mindestens zwei Datenbanken (3, 4), umfassend eine erste Datenbank (3) und ein erstes Datenverarbeitungssystem (2), welches mit der ersten Datenbank (3) verbunden und einem ersten Kommunikationsnetzwerk (1) zugeordnet ist, eine zweite Datenbank (4) und ein zweites Datenverarbeitungssystem (5), welches mit der zweiten Datenbank (4) verbunden und einem zweiten Kommunikationsnetzwerk (6) zugeordnet ist, wobei das erste und das zweite Datenverarbeitungssystem (2, 5) über eine Kommunikationsverbindung (7, 8, 9) miteinander verbunden sind, und wobei in der ersten Datenbank (3) in Datensätzen gehaltene Netzdaten hinterlegt sind und zum Abgleich mit der zweiten Datenbank bereitstehen, **dadurch gekennzeichnet, dass** das erste Datenverarbeitungssystem (2) Mittel zur Führung eines Logbuchs aufweist, in das Änderungen betreffend den Inhalt der ersten Datenbank (3) eintragbar sind, und dass das erste Datenverarbeitungssystem (2) Mittel zur Versendung von Daten aufweist, wobei das zweite Datenverarbeitungssystem (5) Mittel zum Empfang der Daten und Mittel zu deren Hinterlegung in der zweiten Datenbank (4) aufweist, und wobei auf den Datenverarbeitungssystemen (2, 5) jeweils ein Programm als unabhängig und autonom funktionierender Agent vorliegt, der zur Durchführung des Verfahrens nach einem der Ansprüche 1 bis 16 eingerichtet ist.

## Claims

1. Method for automatic synchronizing network data between communication networks of different network operators, in particular with roaming and/or routing data, between at least two databases (3, 4), a first database (3) being connected to a first data-processing system (2) associated with a first communication network (1), a second database (4) being connected to a second data-processing system (5) associated with a second communication network (6), the first and the second data-processing systems (2, 5) being connected to each other by a communication link (7, 8, 9), the first database (3) storing network data held in data sets an being provided for synchronization with the second database (4), wherein a_logbook is maintained on the first data-processing system in which changes relating to the content of the first database (3) are entered, wherein depending on a logbook entry data reflecting a change of at least one data set from the first data-processing system (2) to the second data-processing system (5), and the transmitted data are stored in the second database (4), **characterized in that** the data-processing systems (2, 6) each having respective programs operating as respective first and second agents independently and autonomously to control data access and data storage and to carry out an internal synchronization of the respective databases (3, 4) with up-to-date network data, wherein the agent running on the first data-processing system having a first interface for accessing the data in the first database and having a second interface to an foreign network operator for sending the data to this foreign operator, wherein the agent running on the first data-processing system firstly checks the logbook as to which data in the first database have changed since the last forwarding to the foreign network operator and said agent accesses the data in the first_database (3) and forwards the accessed data through the communication link (7, 8, 9) to the second data-processing system (5), where the forwarded data are received by the second agent running there and stored in the second database (4).

2. The method according to claim 1, **characterized in that** an information relating to the forwarding of data is entered in the logbook.

3. The method according to claim 2, **characterized in that** the information includes the forwarding time and/ or specifications of the forwarded data.

4. The method according to any of the preceding claims, **characterized in that** only those data from the first database (3) are transmitted that have been modified when updating this database (3), wherein a determination being made based on the entries in the logbook as to which data have been modified after the last transmission to the second database (4).

5. The method according to any of the preceding claims, **characterized in that** the forwarding is effected at a specifiable frequency of occurrence at one or more specifiable times or immediately after a change in the content of the first database (3).

6. The method according to any of the preceding claims, **characterized in that** the data is forwarded as complete record sets.

7. The method according to any of the preceding claims, **characterized in that** the receipt of data is confirmed by the second data-processing system (5) and/ or is logged and a confirmation or protocol is transmitted to the first data-processing system (2).

8. The method according to claim 7, **characterized in that** the confirmation of receipt or the content of the protocol is entered into the logbook by the first data-processing system (2).

9. The method according to any of the preceding claims, **characterized in that** a repeat forwarding of the data is effected after a predetermined time interval whenever a confirmation of receipt from the second data-processing (5) system is not forthcoming.

10. The method according to claim 9, **characterized in that** the start of the time interval is determined based on the time entered in the logbook for the forwarding of the data previously transmitted to the second data-processing system (5).

11. The method according to claims 9 or 10, wherein a send failure is entered in the logbook after the data has been forwarded repeatedly and no confirmation of receipt has been received, wherein after a send failure the data to be forwarded then being forwarded through another medium, in particular via e-mail (8) or fax (9), to an administrative center (10) managing the second database (4).

12. The method according to any of the preceding claims, **characterized in that** a modification of the content of the first database (3) is entered in a first logbook, and the forwarding of data or receipt of a confirmation of receipt or protocols of forwarded data are entered in a second logbook.

13. The method according to any of the preceding claims, **characterized in that** at regular intervals documents are generated from the data base content of the first database (3) in which the contents are logged.

14. The method according to any of the preceding claims, **characterized in that** after the databases (3, 4) have been synchronized a message is sent to an administrative center managing the second database (4).

15. The method according to any of the preceding claims, **characterized in that** the data to be forwarded are entered in a list that is forwarded in a document to the second data-processing system (5).

16. The method according to claim 15, **characterized in that** data that are changing in comparison with other data are highlighted in the list.

17. Computer program product for synchronizing network data between communication networks of different network operators, in particular with roaming and/or routing data, between at least two databases (3, 4), a first database (3) being connected to a first data-processing system (2) associated with a first communication network (1), a second database (4) being connected to a second data-processing system (5) associated with a second communication network (6), the first and the second data-processing systems (2, 5) being connected to each other by a communication link (7, 8, 9), the first database (3) storing network data held in data sets an being provided for synchronization with the second database (4), **characterized in that** it is a computer program stored on a storage of the first data-processing system (2), the computer program comprising software means configured to perform the method according to any of the claims 1 to 16 if the computer program is running on the first data-processing system (2).

18. Computer program product for synchronizing network data between communication networks of different network operators, in particular with roaming and/or routing data, between at least two databases (3, 4), a first database (3) being connected to a first data-processing system (2) associated with a first communication network (1), a second database (4) being connected to a second data-processing system (5) associated with a second communication network (6), the first and the second data-processing systems (2, 5) being connected to each other by a communication link (7, 8, 9), the first database (3) storing network data held in data sets an being provided for synchronization with the second database (4), **characterized in that** it is a computer program stored on a storage of the second data-processing system (5), the computer program comprising software means configured to perform the method according to any of the claims 7 to 16 if the computer program is running on the second data-processing system (2).

19. Communications System for synchronizing network data, in particular roaming and/or routing data, between at least two databases (3, 4), comprising a first database (3) and a first data-processing system (2) being connected to the first data base and being associated with a first communication network (1), a second database (4) and a second data-processing system (5) being connected to the second data base and being associated with a second communication network (6), the first and the second data-processing systems (2, 5) being connected to each other by a communication link (7, 8, 9), the first database (3) storing network data held in data sets that are provided for synchronization with the second database (4), **characterized in that** the first data-processing system (2) comprises means for maintaining a logbook into which changes relating to the content of the first database (3) can be entered, the first data-processing system (2) comprises means for forwarding data, wherein the second data-processing system (2) comprises means for receiving data and means for storing said data in the second database (4), and wherein the data-processing systems (2, 6) each having a program independently and autonomously operating as an agent being configured to perform the method according to any of the claims 1 to 16.

## Revendications

1. Procédé de synchronisation automatique de données de réseau entre des réseaux de communication de différents opérateurs de réseau, notamment de données d'itinérance et/ou de données de routage, entre au moins deux bases de données (3, 4), dans lequel une première base de données (3) est reliée à un premier système de traitement de données (2) et le premier système de traitement de données (2) est associé à un premier réseau de communication (1), une seconde base de données (4) est reliée à un second système de traitement de données (5) et le second système de traitement de données (5) est associé à un second réseau de communication (6), dans lequel les premier et second systèmes de traitement de données (2, 5) sont reliés l'un à l'autre par l'intermédiaire d'une liaison de communication (7, 8, 9), et dans lequel des données de réseau contenues dans des enregistrements de données sont stockées dans la première base de données (3) et sont fournies en vue d'une synchronisation avec la seconde base de données (4), dans lequel un fichier journal est acheminé sur le premier système de traitement de données (2), dans lequel sont introduites des modifications concernant le contenu de la première base de données (3), dans lequel une transmission de données concernant la modification d'au moins un enregistrement de données est effectuée en fonction d'une entrée du fichier journal du premier système de traitement de données (2) au second système de traitement de données (5) et les données transmises sont stockées dans la seconde base de données (4), **caractérisé en ce qu'**un programme respectif est exécuté sur les systèmes de traitement de données (2, 5) en tant qu'agent fonctionnant de manière indépendante et autonome qui commande le stockage des données et l'accès aux données et au moyen duquel une synchronisation interne de la base de données respective (3, 4) est effectuée avec les données de réseau actuelles, dans lequel l'agent s'exécutant sur le premier système de traitement de données (2) comprend une première interface destinée à l'accès aux données se trouvant dans la première base de données (3), et une seconde interface avec un opérateur de réseau tiers, destinée à l'envoi des données à ce dernier, dans lequel l'agent s'exécutant sur le premier système de traitement de données (2) vérifie en premier lieu dans le fichier journal quelles données ont été modifiées dans la première base de données (3) depuis le dernier envoi à l'opérateur de réseau tiers et ledit agent accède aux données dans la première base de données (3) et les envoie par l'intermédiaire de la liaison de communication (7, 8, 9) au second système de traitement de données (5) dans lequel elles sont reçues par l'agent s'exécutant dans celui-ci et sont stockées dans la seconde base de données (4).

2. Procédé selon la revendication 1, **caractérisé en ce qu'**une information concernant l'envoi de données est introduite dans le fichier journal.

3. Procédé selon la revendication 2, **caractérisé en ce que** l'information comprend une indication de l'instant d'envoi et/ou une indication des données envoyées.

4. Procédé selon l'une des revendications précédentes, **caractérisé en ce qu'**on ne transmet que les données de la première base de données (3) qui ont été modifiées dans le cadre d'une actualisation de ladite base de données (3), dans lequel il est déterminé sur la base des entrées du fichier journal quelles données ont été modifiées après la dernière transmission à la seconde base de données (4).

5. Procédé selon l'une des revendications précédentes, **caractérisé en ce que** l'envoi est effectué à une fréquence pouvant être prédéterminée à un ou plusieurs instants pouvant être prédéterminés ou immédiatement après une modification du contenu de la première base de données (3).

6. Procédé selon l'une des revendications précédentes, **caractérisé en ce que** l'envoi des données s'effectue par enregistrements de données entiers.

7. Procédé selon l'une des revendications précédentes, **caractérisé en ce que** la réception de données effectuée par le second système de traitement de données (5) fait l'objet d'un accusé de réception et/ou est effectuée selon un protocole et **en ce qu'**une authentification ou un protocole est transmis au premier système de traitement de données (2).

8. Procédé selon la revendication 7, **caractérisé en ce que** l'accusé de réception et/ou le contenu du protocole sont introduits par le premier système de traitement de données (2) dans le fichier journal.

9. Procédé selon l'une des revendications précédentes, **caractérisé en ce que** lors de l'absence d'un accusé de réception du second système de traitement de données (5), un nouvel envoi des données est effectué après un intervalle de temps pouvant être prédéterminé.

10. Procédé selon la revendication 9, **caractérisé en ce que** le début de l'intervalle de temps est déterminé conformément à l'instant, introduit dans le fichier journal, de l'envoi des données préalablement transmises au second système de traitement de données (5).

11. Procédé selon la revendication 9 ou 10, **caractérisé en ce qu'**après l'envoi répété des données et lors de la non-réception d'un accusé de réception, un échec d'envoi est introduit dans le fichier journal, dans lequel les données à envoyer après l'échec de l'envoi sont envoyées par l'intermédiaire d'un autre support, notamment par courrier électronique (8) ou télécopie (9), à un service administratif (10) administrant la seconde base de données (4).

12. Procédé selon l'une des revendications précédentes, **caractérisé en ce qu'**une modification du contenu de la première base de données (3) est introduite dans le fichier journal et **en ce que** l'envoi de données ou l'obtention d'accusés de réception ou de protocoles de données envoyées sont introduits dans un second fichier journal.

13. Procédé selon l'une des revendications précédentes, **caractérisé en ce que** des documents dans lesquels les contenus de bases de données sont enregistrés conformément à un protocole, sont créés à des intervalles réguliers à partir du contenu de base de données de la première base de données (3).

14. Procédé selon l'une des revendications précédentes, **caractérisé en ce qu'**après la synchronisation des bases de données (3, 4), un message est envoyé à un service d'administration administrant la seconde base de données (4).

15. Procédé selon l'une des revendications précédentes, **caractérisé en ce que** les données prévues pour être envoyées sont introduites dans une liste et **en ce que** la liste est envoyée dans un document au second système de traitement de données (5).

16. Procédé selon la revendication 15, **caractérisé en ce que** les données modifiées par comparaison à d'autres données sont marquées dans la liste.

17. Produit de programme informatique destiné à la synchronisation de données de réseau entre des réseaux de communication de différents opérateurs de réseau, notamment de données d'itinérance et/ou de données de routage, entre au moins deux bases de données (3, 4), dans lequel une première base de données (3) est reliée à un premier système de traitement de données (2) et le premier système de traitement de données (2) est associé à un premier réseau de communication (1), une seconde base de données (4) est reliée à un second système de traitement de données (5) et le second système de traitement de données (5) est associé à un second réseau de communication (6), dans lequel les premier et second systèmes de traitement de données (2, 5) sont reliés l'un à l'autre par l'intermédiaire d'une liaison de communication (7, 8, 9), et dans lequel des données de réseau contenues dans des enregistrements de données sont stockées dans la première base de données (3) et sont fournies en vue d'une synchronisation avec la seconde base de données (4), **caractérisé en ce qu'**il comprend un programme informatique stocké dans une mémoire du premier système de traitement de données (2), comportant des moyens logiciels destinés à mettre en oeuvre le procédé selon l'une des revendications 1 à 16 lorsque le programme informatique est exécuté sur le premier système de traitement de données (2).

18. Produit de programme informatique destiné à la synchronisation de données de réseau entre des réseaux de communication de différents opérateurs, notamment de données d'itinérance et/ou de données de routage, entre au moins deux bases de données (3, 4), dans lequel une première base de données (3) est reliée à un premier système de traitement de données (2) et le premier système de traitement de données (2) est associé à un premier réseau de communication (1), une seconde base de données (4) est reliée à un second système de traitement de données (5) et le second système de traitement de données (5) est associé à un second réseau de communication (6), dans lequel les premier et second systèmes de traitement de données (2, 5) sont reliés l'un à l'autre par l'intermédiaire d'une liaison de communication (7, 8, 9), et dans lequel des données de réseau contenues dans des enregistrements de données sont stockées dans la première base de données (3) et sont fournies en vue d'une synchronisation avec la seconde base de données (4), **caractérisé en ce qu'**il comprend un programme informatique stocké dans une mémoire du second système de traitement de données (5), comportant des moyens logiciels destinés à mettre en oeuvre le procédé selon l'une des revendications 7 à 16 lorsque le programme informatique est exécuté sur le second système de traitement de données (5).

19. Système de communication destiné à la synchronisation de données de réseau, notamment de données d'itinérance et/ou de données de routage, entre au moins deux bases de données (3, 4), comprenant une première base de données (3) et un premier système de traitement de données (2) qui est relié à la première base de données (3) et est associé à un premier réseau de communication (1), une seconde base de données (4) et un second système de traitement de données (5) qui est relié à la seconde base de données (4) et est associé à un second réseau de communication (6), dans lequel les premier et second systèmes de traitement de données (2, 5) sont reliés l'un à l'autre par l'intermédiaire d'une liaison de communication (7, 8, 9), et dans lequel des données de réseau contenues dans des enregistrements de données sont stockées dans la première base de données (3) et sont fournies en vue d'une synchronisation avec la seconde base de données, **caractérisé en ce que** le premier système de traitement de données (2) comprend des moyens destinés à acheminer un fichier journal dans lequel des modifications concernant le contenu de la première base de données (3) peuvent être introduites, et **en ce que** le premier système de traitement de données (2) comprend des moyens destinés à envoyer des données, dans lequel le second système de traitement de données (5) comprend des moyens destinés à recevoir les données et des moyens destinés à stocker ces dernières dans la seconde base de données (4), et dans lequel un programme respectif est présent en tant qu'agent fonctionnant de manière indépendante et autonome sur les systèmes de traitement de données (2, 5), celui-ci étant destiné à mettre en oeuvre le procédé selon l'une des revendications 1 à 16.
